# FASCICULE DE BREVET EUROPEEN

(11) **EP 2 686 598 B1**
(45) Date de publication et mention de la délivrance du brevet: **07.01.2015**
(21) Numéro de dépôt: 12708874.8
(22) Date de dépôt: 16.03.2012
(51) Int. Cl.: F16L 37/084, G02B 6/44, H02G 3/06

(54) **DISPOSITIF DE RACCORDEMENT DE TUBE, POURVU INTERIEUREMENT D'UNE BUTEE MOBILE**
VORRICHTUNG ZUM VERBINDEN VON ROHREN MIT EINEM INTERNEN MOBILEN ANSCHLAG
DEVICE FOR CONNECTING TUBES, INTERNALLY PROVIDED WITH A MOBILE LIMIT STOP

(30) Priorité: 18.03.2011 FR 1152273
(43) Date de publication de la demande: 22.01.2014
(73) Titulaire: Parker Hannifin Manufacturing France SAS, 74112 Annemasse (FR)
(72) Inventeur: LE QUERE, Philippe, F-35830 Betton (FR); SANCHEZ, Frédéric, F-35200 Rennes (FR)
(74) Mandataire: Lavialle, Bruno François Stéphane
(86) Numéro de dépôt international: PCT/EP2012/054728
(87) Numéro de publication internationale: WO 2012/126858

(56) Documents cités:
- EP-A1- 1 818 702
- DE-U1- 29 908 541
- FR-A1- 2 920 887

## Description

La présente invention concerne un dispositif de raccordement de tubes tels que des tubes de transport de fluide ou des tubes de protection d'un câble électrique ou d'un câble à fibres optiques.

Un circuit de transmission optique comprend un câble à fibres optiques reçu dans des tubes de protection reliés les uns aux autres par des dispositifs de raccordement. L'installation d'un tel circuit débute par la mise en place et le raccordement des tubes dans lesquels le câble à fibres optiques va être introduit sous pression d'air de manière à être poussé par l'air le long des tubes. Les dispositifs de raccordement doivent donc présenter deux états : un état de montage dans lequel le libre passage du câble à fibres optiques est autorisé et un état d'utilisation dans lequel les dispositifs de raccordement isolent les tubes qu'ils raccordent en créant une étanchéité autour du câble à fibres optiques. De tels dispositifs sont connus de FR 2 920 887 A.

Il est connu du document US-A-2007200344 un dispositif de raccordement de tubes de protection d'un câble à fibres optiques, comprenant un corps tubulaire délimitant un canal comportant un premier logement d'extrémité et un deuxième logement d'extrémité qui sont chacun agencés pour recevoir un des tubes et pourvus de moyens de retenue étanche dudit tube. Le corps comporte un redan annulaire s'étendant entre les logements pour former une butée à l'enfoncement des tubes dans les logements. Un élément annulaire d'étanchéité est disposé dans le premier logement au voisinage d'un flanc tronconique du redan. L'élément d'étanchéité a un état de repos dans lequel l'élément d'étanchéité délimite une section de libre passage du câble. Lors de l'enfoncement du tube dans le premier logement, le tube force l'élément d'étanchéité dans la restriction délimitée dans le canal par le redan annulaire qui déforme l'élément d'étanchéité vers un deuxième état dans lequel l'élément d'étanchéité délimite une section inférieure à la section du câble. L'engagement à force de l'élément d'étanchéité dans la restriction du canal demande un effort important à l'utilisateur lors de l'insertion du tube dans le premier logement. En outre, le comportement de l'élément d'étanchéité lors de son insertion dans la restriction est aléatoire. Il est dès lors difficile pour l'opérateur de savoir si le tube a été suffisamment enfoncé pour obtenir la déformation souhaitée de l'élément d'étanchéité. Le dimensionnement de l'élément d'étanchéité et de la restriction du canal, ainsi que le choix du matériau de l'élément d'étanchéité sont délicats.

Ainsi, le bon fonctionnement de ces dispositifs à deux états, à savoir un état de montage dans lequel le libre passage du câble à fibres optiques est autorisé et un état d'utilisation dans lequel les dispositifs de raccordement isolent les tubes qu'ils raccordent en créant une étanchéité autour du câble à fibres optiques, suppose que l'utilisateur n'amène pas, par inadvertance, le dispositif directement dans son état d'utilisation lors de l'insertion des tubes préalablement au montage. En effet, dans un tel cas, l'élément d'étanchéité viendrait s'opposer au libre passage du câble à fibres optiques.

Pour résoudre ce problème, on aurait pu imaginer un dispositif dont le corps comporterait un relief disposé dans le premier logement pour former une butée franchissable pour le tube de telle manière que le tube en butée contre le relief laisse le dispositif dans son premier état et le tube ayant franchi le relief pousse l'élément d'étanchéité dans la striction pour amener le dispositif dans son deuxième état.

Toutefois, l'engagement à force de l'élément d'étanchéité dans la restriction du canal demanderait un effort encore plus important à l'utilisateur du fait du frottement du tube contre le relief.

Un but de l'invention est de fournir un dispositif de raccordement amélioré.

A cette fin, on prévoit, selon l'invention, un dispositif de raccordement d'au moins un tube à un conduit, comprenant un corps tubulaire délimitant un canal ayant une extrémité pourvue de moyens de liaison au conduit et une extrémité opposée comportant un logement pourvu de moyens de réception et de retenue étanche d'une portion d'extrémité du tube. Le logement comporte un épaulement terminal et reçoit un élément annulaire d'étanchéité qui est disposé au voisinage de l'épaulement et qui est déformable depuis un premier état dans lequel l'élément d'étanchéité délimite une première section de passage et un deuxième état dans lequel l'élément d'étanchéité délimite une deuxième section de passage inférieure à la première section de passage. Les moyens de réception et de retenue comprennent une bague qui est pourvue intérieurement d'une butée à l'enfoncement du tube dans la bague et qui est mobile axialement dans le logement entre une première position au contact de l'élément d'étanchéité et une deuxième position en retrait par rapport à la première position. Le dispositif comprend des moyens débrayables de butée au déplacement de la bague vers sa première position, qui sont agencés pour pouvoir être débrayés depuis l'extérieur du corps.

Ainsi, la bague dans sa deuxième position offre une butée franche au tube tandis que le déplacement du tube vers l'élément d'étanchéité est autorisé par la mobilité axiale de la bague et n'entraîne aucun déplacement relatif du tube par rapport à la bague. L'effort à déployer pour déformer l'élément d'étanchéité est donc limité et ne dépend que des caractéristiques mécaniques de celui-ci.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective avec écorché d'un dispositif conforme à l'invention,
- les figures 2 et 3 sont des vues en coupe longitudinale de ce dispositif montrant la bague dans sa deuxième position et dans sa première position respectivement,
- la figure 4 est une vue en perspective d'un élément d'étanchéité conforme à l'invention, dans son premier état,
- la figure 5 est une vue en perspective du verrou de la bague,
- les figures 6 et 7 sont des vues en coupe longitudinale d'un dispositif selon une variante de réalisation de l'invention, montrant la bague dans sa deuxième position et dans sa première position respectivement.

Le dispositif de l'invention est ici décrit dans une mise en oeuvre au sein d'un réseau de fibres optiques.

En référence aux figures, le dispositif de raccordement de l'invention, généralement désigné en 1, est destiné à permettre le raccordement l'un à l'autre de tubes de protection 101 d'un câble à fibres optiques 103 s'étendant dans les tubes 101 au travers du dispositif de raccordement 1.

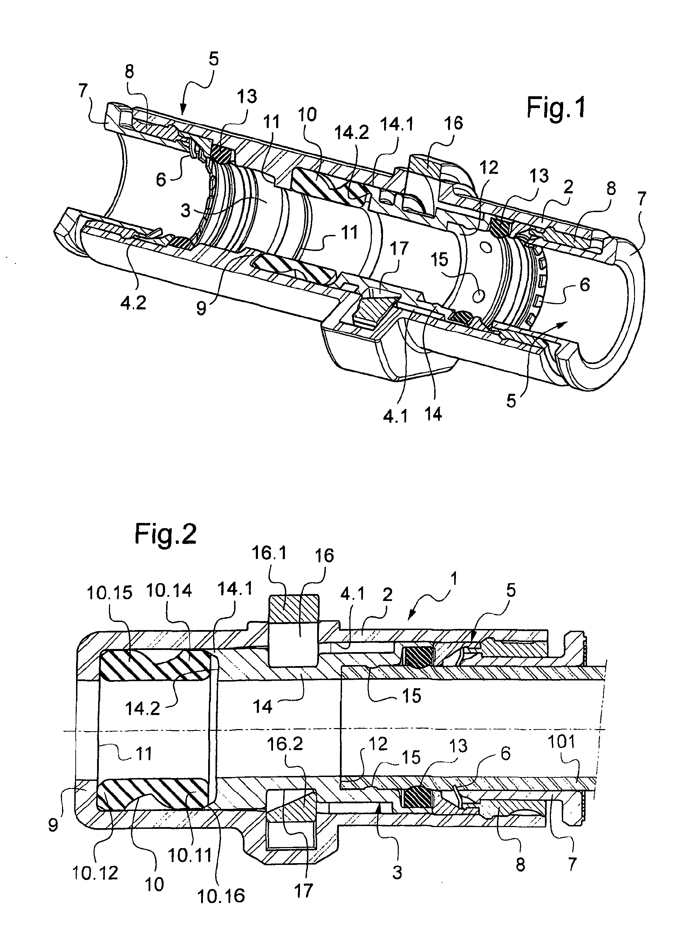

Le dispositif de raccordement 1 comprend un corps 2 tubulaire délimitant un canal 3 comportant un premier logement d'extrémité 4.1 et un deuxième logement d'extrémité 4.2 (visible uniquement sur la figure 1) qui sont agencés pour recevoir chacun une portion d'extrémité d'un des tubes 101. Le corps 2 comporte un redan annulaire 9 s'étendant en saillie dans le canal 3 entre les logements 4.1, 4.2. Le redan annulaire 9 comporte des flancs radiaux 11 formant épaulements.

Un élément annulaire d'étanchéité 10 est disposé dans le premier logement 4.1 au voisinage du flanc radial 11 du redan 9. L'élément d'étanchéité 10 est déformable depuis un premier état dans lequel l'élément d'étanchéité 10 délimite une section de libre passage du câble 103 vers un deuxième état dans lequel l'élément d'étanchéité 10 délimite une section inférieure à une section du câble 103. L'élément d'étanchéité 10 est agencé pour être amené vers son deuxième état sous l'effet d'un effort axial de compression.

L'élément d'étanchéité 10 a une extrémité 10.11 opposée au redan 9 et une extrémité opposée 10.12 du côté du redan 9.

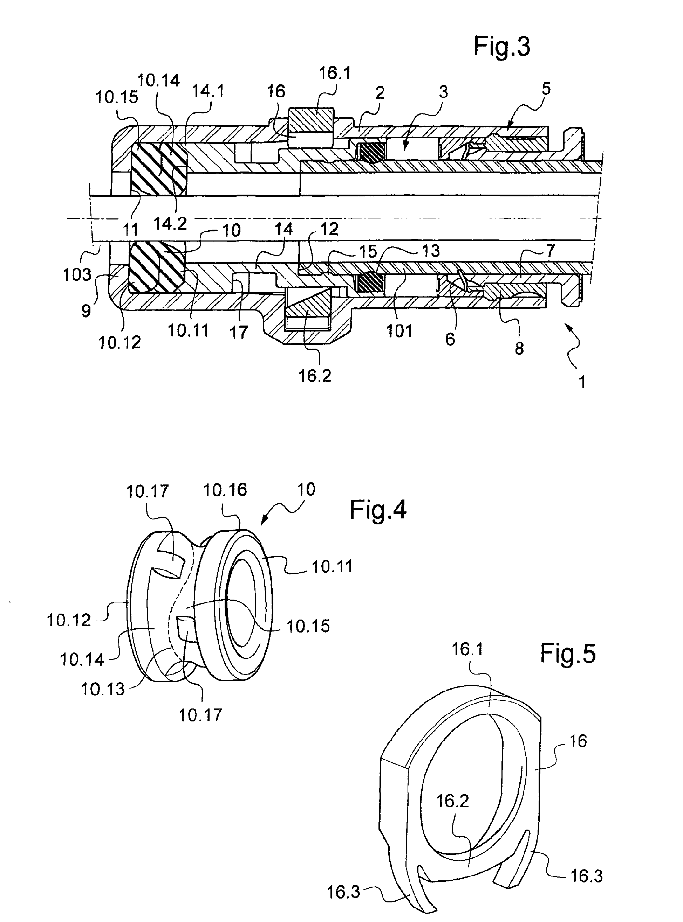

L'élément d'étanchéité 10 a une forme de diabolo tubulaire agencé pour se déformer dans son deuxième état le long d'une ligne annulaire sinueuse 10.13 (en trait mixte double sur la figure 4).

L'élément d'étanchéité 10 comporte des portions 10.14, 10.15 de raideurs différentes qui sont agencées en deux groupes axialement opposés disposés chacun à une extrémité de l'élément d'étanchéité. Ces portions comprennent des portions de plus faible raideur 10.14 alternant avec des portions de plus forte raideur 10.15 sur un même côté de l'élément d'étanchéité. Ainsi chaque portion de plus faible raideur 10.14 d'un des groupes fait face à une portion de plus forte raideur 10.15 de l'autre groupe.

Il est visible que les portions de plus faible raideur 10.14 ont une épaisseur inférieure à une épaisseur des portions de plus forte raideur 10.15.

Plus précisément, les portions de plus forte raideur 10.15 incorporent un renfort local 10.17 sous la forme d'un relief créant une surépaisseur locale. Le renfort local 10.17 peut aussi, par exemple, être réalisé sous la forme d'un élément, en un matériau plus raide que le matériau du corps de l'élément d'étanchéité 10, qui est rapporté sur la surface externe de l'élément d'étanchéité 10 ou incorporé dans le matériau du corps de l'élément d'étanchéité 10. A l'inverse, les portions de plus faible raideur 10.14 peuvent incorporer un élément d'affaiblissement local comme un creux ou une couche de matériau de raideur plus faible que le reste du matériau de l'élément d'étanchéité 10.

Le premier logement 4.1 et le deuxième logement 4.2 sont chacun pourvus de moyens, généralement désignés en 5, de réception et de retenue étanche dudit tube. Les moyens de réception et de retenue étanche 5 comprennent des moyens d'accrochage comportant ici un insert 8 dans lequel sont montés une rondelle 6 déformable ayant une circonférence interne dentée pour mordre la surface extérieure du tube et un poussoir 7 de déconnexion. La structure et l'agencement des moyens d'accrochage sont connus en eux-mêmes et ne seront pas plus détaillés ici. L'utilisation d'une rondelle déformable dentée est avantageuse car elle permet l'accrochage du tube sans recul de celui-ci.

Les moyens de réception et de retenue étanche 5 disposés dans le premier logement 4.1 comprennent en outre une bague 14 qui est pourvue intérieurement d'une butée 12 à l'enfoncement du tube dans la bague 14. La bague 14 comprend ainsi un alésage étagé ayant un tronçon d'entrée pourvu d'un élément d'étanchéité 13, un tronçon intermédiaire de diamètre légèrement supérieur au diamètre extérieur du tube pour recevoir l'extrémité du tube et un tronçon final ayant un diamètre inférieur au diamètre extérieur du tube et se raccordant au tronçon intermédiaire par un épaulement formant la butée 12. Le tronçon intermédiaire est pourvu de reliefs 15 en saillie interne pour exercer localement une pression sur le tube. La bague 14 est ainsi agencée pour enserrer la portion d'extrémité de tube.

Dans le mode de réalisation décrit, la bague 14 comprend un rebord externe 14.1 s'étendant en saillie axiale d'une surface terminale 14.2 pour s'introduire entre la paroi du corps 2 délimitant le premier logement 4.1 et une portion externe 10.16 du côté de l'extrémité 10.11 de l'élément d'étanchéité 10. Le rebord externe 14.1 comprend une surface intérieure tronconique 14.2 et la portion externe 10.16 de l'élément d'étanchéité 10 a une forme tronconique correspondante.

La bague 14 est mobile axialement dans le logement 4.1 entre une première position dans laquelle la bague 14 est rapprochée du redan 9 et une deuxième position dans laquelle la bague 14 est écartée du redan 9. Plus précisément, lorsque la bague 14 est dans sa première position, elle comprime axialement l'élément d'étanchéité 10 et le déforme dans son deuxième état et lorsque la bague 14 est dans sa deuxième position, elle laisse l'élément d'étanchéité 10 dans son premier état et est en butée contre l'insert 8 tout en restant en contact avec l'élément d'étanchéité 10. On notera que la bague 14 n'est en contact avec le corps 2 que par ses deux extrémités pour limiter les frottements tout en assurant un bon guidage.

Le dispositif comprend des moyens débrayables de butée s'opposant au déplacement de la bague 14 vers sa première position, qui sont agencés pour pouvoir être débrayés depuis l'extérieur du corps 1.

Les moyens de butée comprennent un verrou 16 monté sur le corps pour être mobile radialement entre une position de blocage (figure 2) en saillie dans le logement et une position de déblocage (figure 3) en retrait par rapport à la position de blocage. La bague 14 est pourvue d'une gorge extérieure 17 pour recevoir une partie du verrou 16 en position de blocage lorsque la bague 14 est dans sa deuxième position de manière que le verrou 16 s'oppose au déplacement de la bague 14 vers sa première position.

Le verrou 16 a ici une forme d'anneau qui est logé dans le corps 2 et qui a une portion supérieure 16.1 (selon l'orientation du dispositif dans les figures) en saillie du corps 2 et une portion inférieure 16.2 ayant une circonférence interne agencée pour former une butée pour la bague 14. La portion inférieure 16.2 est en biseau pour présenter une face radiale du côté des moyens d'accrochage et un chanfrein du côté du redan 9. La portion inférieure 16.2 est pourvue extérieurement d'au moins une patte élastique 16.3, ici au nombre de deux, prenant appui sur une surface du corps 2 pour rappeler le verrou 16 dans sa position de blocage.

Pour l'installation du câble 103, le tube 101 est introduit dans le logement 4.1 pour former un circuit dans lequel le câble 103 est destiné à s'étendre. Le tube 101 est enfoncé dans la bague 14 jusqu'à l'épaulement de butée 12 et le tube 102 jusqu'au redan 9 (figure 2). Le verrou 16 s'oppose au déplacement de la bague 14 vers sa première position. Les éléments d'étanchéité 10 et 13 assurent l'étanchéité du raccordement et la rondelle 6 empêche le recul du tube 101. Le câble 103 est ensuite introduit dans un tube d'extrémité du circuit et de l'air sous pression est également introduit dans ce tube pour pousser le câble le long des tubes du circuit et à travers les dispositifs de raccordement.

Lorsque le câble 103 est en place, chaque verrou est amené par l'opérateur dans sa position de déblocage et le tube 101 est enfoncé de manière à amener la bague 14 vers sa première position et comprimer axialement l'élément d'étanchéité 10 de manière à amener celui-ci vers son deuxième état dans lequel l'élément d'étanchéité 10 enserre le câble 103 (figure 3).

La bague 14 sert ainsi de piston et facilite la compression axiale de l'élément d'étanchéité 10. Ceci est particulièrement intéressant notamment lorsque, comme ici, le tube 101 a un diamètre extérieur inférieur au diamètre extérieur de l'élément d'étanchéité 10.

L'élément d'étanchéité est donc déformé contre le redan sans pénétrer dans celui-ci. La déformation est ainsi obtenue de manière directe par l'action du tube ce qui permet de simplifier la conception pour limiter l'effort nécessaire à la déformation de l'élément d'étanchéité et faciliter la perception par l'opérateur d'un enfoncement correct du tube. La déformation de l'élément d'étanchéité est réversible de sorte qu'en cas de besoin, il est possible de déconnecter les tubes pour les reconnecter ensuite sans intervention sur l'élément d'étanchéité. La compression axiale de l'élément d'étanchéité peut être obtenue en exerçant un effort relativement faible. Ce mode de déformation selon une ligne sinueuse permet une grande amplitude de déformation tout en assurant une ferme application de l'élément d'étanchéité dans son deuxième état sur le câble à fibres optiques dans l'application envisagée ci-dessus.

On notera que, lorsque la bague d'appui 14 est appliquée contre l'élément d'étanchéité 10 sous l'effort d'insertion du tube 101, le rebord 14.1 de la bague 14 décolle la portion externe 10.16 de la paroi du corps 2 pour faciliter le déplacement de la portion externe 10.16 qui va conduire à la compression axiale de l'élément d'étanchéité 10 et donc à sa déformation dans son deuxième état. En effet, lors de la compression, chaque portion de plus forte raideur 10.15 se trouve en regard d'une portion de plus faible raideur 10.14 créant ainsi une déformation selon une ligne annulaire sinueuse.

Le décollement de la portion externe 10.16 permet de limiter les efforts nécessaires à la déformation de l'élément d'étanchéité 10 dans son deuxième état.

L'épaulement 11 a une forme tronconique à petite section orientée vers la bague et la surface 14.2 de la bague 14 destinée à venir en appui de l'élément d'étanchéité 10 a une forme tronconique à petite section orientée vers l'épaulement. Ceci permet d'éviter que l'élément d'étanchéité ne soit chassé dans le canal sous la compression exercée par la bague 14.

Pour faciliter les opérations de montage, le corps 2 et la bague 14 sont avantageusement réalisés en un matériau transparent pour vérifier visuellement la présence du câble 103 et l'état de l'élément d'étanchéité 10.

On notera que comme la bague 14 enserre le tube 101, une traction sur le tube 101, alors que le poussoir 7 est enfoncé, ramène la bague 14 dans sa deuxième position. Le retour de la bague 14 vers sa deuxième position est également assisté par le retour élastique de l'élément d'étanchéité 10 dans son premier état.

Les éléments identiques ou analogues à ceux précédemment décrits porteront la même référence numérique que ces derniers dans la description qui suit d'une variante de réalisation de l'invention.

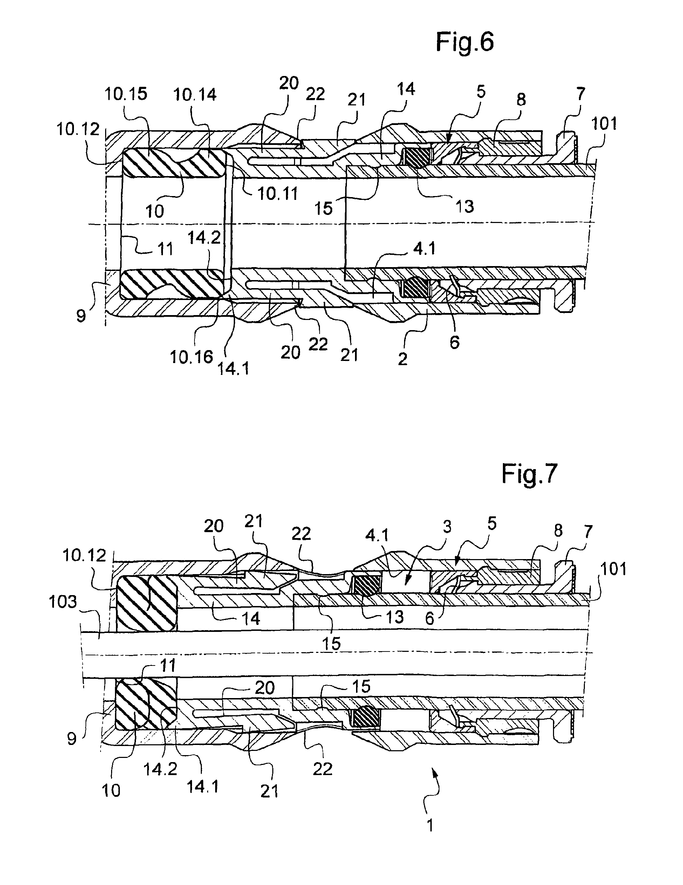

En référence aux figures 6 et 7, le dispositif selon cette variante de réalisation comprend, comme précédemment, un corps 2 délimitant un canal 3 avec des logements d'extrémité (seul le logement 4.1 étant visible ici) recevant des moyens de réception et de retenue étanche 5 comportant des moyens d'accrochage. Les logements sont séparés par un redan 9 dont les flancs 11 forment des épaulements.

Le logement 4.1 comprend en outre un élément d'étanchéité 10 identique à celui précédemment décrit et une bague 14.

La bague 14 est identique à la bague 14 des figures 1 à 6 sauf en ce que la bague 14 de la variante de réalisation embarque les moyens débrayables de butée.

Les moyens débrayables de butée comprennent deux bras 20 s'étendant symétriquement à l'extérieur et de part et d'autre de la bague 14, le long d'une direction axiale de celle-ci. Chaque bras 20 comporte une extrémité solidaire de la bague et une extrémité opposée libre et pourvue d'une saillie extérieure 21.

Le corps 2 est percé de deux ouvertures 22 positionnées pour recevoir chacune une des saillies 21 lorsque la bague 14 est dans sa deuxième position de sorte que les bras 20 s'opposent au déplacement de la bague 14 vers sa première position.

Comme les ouvertures 22 débouchent également à l'extérieur du corps 2, il est possible de dégager manuellement les saillies 21 des ouvertures 22 pour autoriser le déplacement de la bague 14 vers sa première position.

Bien entendu, l'invention n'est pas limitée aux modes de réalisation décrits mais englobe toute variante entrant dans le champ de l'invention telle que définie par les revendications.

En particulier, l'élément d'étanchéité peut également avoir une section transversale de forme en U.

Le redan 9 et la butée 12 peuvent être interrompus ou continus.

Les moyens d'accrochage peuvent avoir une structure différente et comprendre par exemple un verrou mobile radialement pour bloquer ou libérer un relief du tube, ou une pince.

Les moyens de butée peuvent avoir une structure différente de celles décrites, comportant par exemple un verrou radial monté sur la bague.

L'invention est utilisable pour d'autres applications que les réseaux de fibres optiques et par exemple les circuits électriques et les circuits fluidiques, notamment ceux comportant des canalisations à passages coaxiaux.

Le dispositif peut être agencé pour raccorder un tube à un conduit tel que celui ménagé dans un élément d'un circuit de transport de fluide.

## Revendications

1. Dispositif de raccordement (1) d'au moins un tube (101) à un conduit, comprenant un corps (2) tubulaire délimitant un canal (3) ayant une extrémité pourvue de moyens de liaison au conduit et une extrémité opposée comportant un logement (4.1) pourvu de moyens (5) de réception et de retenue étanche d'une portion d'extrémité du tube, le logement comportant un épaulement (11) terminal et recevant un élément annulaire d'étanchéité (10) qui est disposé au voisinage de l'épaulement (11) et qui est déformable depuis un premier état dans lequel l'élément d'étanchéité délimite une première section de passage et un deuxième état dans lequel l'élément d'étanchéité délimite une deuxième section de passage inférieure à la première section de passage, **caractérisé en ce que** les moyens (5) de réception et de retenue comprennent une bague (14) qui est pourvue intérieurement d'une butée (12) à l'enfoncement du tube dans la bague et qui est mobile axialement dans le logement entre une première position au contact de l'élément d'étanchéité (10) et une deuxième position en retrait par rapport à la première position, et **en ce que** le dispositif comprend des moyens débrayables (16, 20) de butée au déplacement de la bague (14) vers sa première position, qui sont agencés pour pouvoir être débrayés depuis l'extérieur du corps.

2. Dispositif selon la revendication 1, dans lequel les moyens de réception et de retenue étanche comportent un élément d'étanchéité (13) disposé dans la bague (14) pour enserrer le tube.

3. Dispositif selon la revendication 1, dans lequel la bague (14) comprend un rebord externe (14.1) s'étendant en saillie axiale pour s'introduire entre le corps (2) et une portion externe (10.16) de l'élément d'étanchéité (10).

4. Dispositif selon la revendication 3, dans lequel le rebord externe (14.1) comprend une surface intérieure tronconique (14.2) et la portion externe (10.16) de l'élément d'étanchéité (10) a une forme tronconique.

5. Dispositif selon la revendication 1, dans lequel l'épaulement (11) a une forme tronconique à petite section orientée vers la bague et la surface de la bague (14) destinée à venir en appui de l'élément d'étanchéité (10) a une forme tronconique à petite section orientée vers l'épaulement.

6. Dispositif selon la revendication 1, dans lequel la bague (14) est agencée pour enserrer la portion d'extrémité de tube.

7. Dispositif selon la revendication 6, dans lequel la bague (14) est pourvue intérieurement d'au moins un relief pour exercer une pression locale sur la portion d'extrémité de tube.

8. Dispositif selon la revendication 1, dans lequel les moyens de butée comprennent un verrou (16 ; 21) monté sur le corps (2) pour être mobile radialement entre une position de blocage en saillie dans le logement (4.1) et une position de déblocage escamotée, la bague (14) étant pourvue d'une gorge extérieure (17) pour recevoir le verrou en position de blocage lorsque la bague est dans sa deuxième position.

9. Dispositif selon la revendication 8, dans lequel le verrou (16) a une forme d'anneau pourvu d'au moins une patte élastique (16.3) prenant appui sur une surface du corps (2) pour rappeler le verrou dans sa position de blocage.

10. Dispositif selon la revendication 1, dans lequel les moyens de butée comprennent au moins un verrou (21) monté sur la bague (14) pour être mobile radialement entre une position de blocage en saillie dans une ouverture (22) du corps (2) débouchant à l'extérieur de celui-ci et une position de déblocage escamotée par rapport à l'ouverture.

11. Dispositif selon la revendication 10, dans lequel le verrou (21) est un bras élastiquement déformable ayant une extrémité solidaire de la bague (14) et une extrémité libre en saillie dans l'ouverture pour s'étendre selon une direction axiale de la bague.

12. Dispositif selon la revendication 1, dans lequel l'élément d'étanchéité (10) est agencé pour être amené dans son deuxième état sous l'effet d'une compression axiale et le premier logement est agencé pour que la bague (14) puisse comprimer axialement l'élément d'étanchéité annulaire contre l'épaulement (11) lorsqu'elle est dans sa première position, la bague dans sa deuxième position laissant l'élément d'étanchéité libre d'être dans son premier état.

13. Dispositif selon la revendication 12, dans lequel lorsque la bague (14) est dans sa deuxième position, la bague est en contact étanche avec l'élément d'étanchéité (10) annulaire.

14. Dispositif selon la revendication 12, dans lequel l'élément d'étanchéité (10) est agencé pour se déformer dans son deuxième état le long d'une ligne annulaire sinueuse (10.13).

15. Dispositif selon la revendication 12, dans lequel l'élément d'étanchéité (10) comporte des portions axialement opposées de raideurs différentes, des portions de plus faible raideur (10.14) alternant avec des portions de plus forte raideur (10.15) sur un même côté de l'élément d'étanchéité.

16. Dispositif selon la revendication 15, dans lequel les portions de plus faible raideur (10.14) ont une épaisseur inférieure à une épaisseur des portions de plus forte raideur (10.15).

17. Dispositif selon la revendication 15, dans lequel les portions de plus forte raideur (10.15) incorporent un renfort local (10.17).

18. Dispositif selon la revendication 1, dans lequel le corps (2) et la bague (14) sont réalisés en un matériau transparent.

## Patentansprüche

1. Verbindungsvorrichtung (1) zum Verbinden mindestens eines Rohres (101) mit einer Leitung, umfassend ein rohrförmiges Gehäuse (2), das einen Kanal (3) begrenzt, der ein Ende hat, das mit Mitteln zur Verbindung mit der Leitung versehen ist, sowie ein entgegengesetztes Ende, das eine Aufnahme (4.1) umfasst, die mit Mitteln (5) zum Aufnehmen und zum dichten Halten eines Endabschnittes des Rohres versehen ist, wobei die Aufnahme eine Endschulter (11) umfasst und ein ringförmiges Dichtungselement (10) aufnimmt, das nahe der Schulter (11) angeordnet und von einem ersten Zustand, in dem das Dichtungselement einen ersten Durchtrittsquerschnitt begrenzt, in einen zweiten Zustand verformbar ist, in dem das Dichtungselement einen zweiten Durchtrittsquerschnitt begrenzt, der kleiner als der erste Durchtrittsquerschnitt ist, **dadurch gekennzeichnet, dass** die Mittel (5) zum Aufnehmen und Halten einen Ring (14) umfassen, der innen mit einem Anschlag (12) entgegen einem Eindrücken des Rohres in den Ring versehen und der in der Aufnahme zwischen einer ersten Position in Kontakt mit dem Dichtungselement (10) und einer relativ zur ersten Position zurückversetzten zweiten Position axial beweglich ist, und dass die Vorrichtung ausrückbare Anschlagmittel (16, 20) entgegen der Verschiebung des Ringes (14) in seine erste Position umfasst, die derart angeordnet sind, dass sie von außerhalb des Gehäuses ausrückbar sind.

2. Vorrichtung nach Anspruch 1, wobei die Mittel zum Aufnehmen und dichten Halten ein Dichtungselement (13) umfassen, das in dem Ring (14) angeordnet ist, um das Rohr einzuspannen.

3. Vorrichtung nach Anspruch 1, wobei der Ring (14) einen Außenrand (14.1) umfasst, der axial vorsteht, um sich zwischen dem Gehäuse (2) und einem Außenabschnitt (10.16) des Dichtungselements (10) einzufügen.

4. Vorrichtung nach Anspruch 3, wobei der Außenrand (14.1) eine kegelstumpfförmige Innenfläche (14.2) und der Außenabschnitt (10.16) des Dichtungselements (10) eine Kegelstumpfform hat.

5. Vorrichtung nach Anspruch 1, wobei die Schulter (11) eine Kegelstumpfform mit kleinem Querschnitt hat, der zum Ring gerichtet ist, und die Oberfläche des Rings (14), die dazu bestimmt ist, an dem Dichtungselement (10) zur Anlage zu kommen, eine Kegelstumpfform mit kleinem Querschnitt hat, der zur Schulter gerichtet ist.

6. Vorrichtung nach Anspruch 1, wobei der Ring (14) derart angeordnet ist, dass er den Endabschnitt des Rohres einspannt.

7. Vorrichtung nach Anspruch 6, wobei der Ring (14) innen mit mindestens einem Relief versehen ist, um auf den Endabschnitt des Rohres einen lokalen Druck auszuüben.

8. Vorrichtung nach Anspruch 1, wobei die Anschlagmittel einen Riegel (16; 21) umfassen, der an dem Gehäuse (2) derart gelagert ist, dass er zwischen einer in die Aufnahme (4.1) vorstehenden Blockierposition und einer ausgerückten Freigabeposition radial beweglich ist, wobei der Ring (14) mit einer Außennut (17) versehen ist, um den Riegel in der Blockierposition aufzunehmen, wenn der Ring in seiner zweiten Position ist.

9. Vorrichtung nach Anspruch 8, wobei der Riegel (16) eine Ringform hat, die mit mindestens einer elastischen Lasche (16.3) versehen ist, die an einer Oberfläche des Gehäuses (2) zur Anlage kommt, um den Riegel in seine Blockierposition rückzustellen.

10. Vorrichtung nach Anspruch 1, wobei die Anschlagmittel mindestens einen Riegel (21) umfassen, der an dem Ring (14) derart gelagert ist, dass er zwischen einer Blockierposition, die in eine Öffnung (22) des Gehäuses (2) vorsteht, die auf dessen Außenseite mündet, und einer relativ zur Öffnung ausgerückten Freigabeposition radial beweglich ist.

11. Vorrichtung nach Anspruch 10, wobei der Riegel (21) ein elastisch verformbarer Arm ist, der ein mit dem Ring (14) verbundenes Ende und ein in die Öffnung vorstehendes freies Ende hat, um sich in axialer Richtung des Rings zu erstrecken.

12. Vorrichtung nach Anspruch 1, wobei das Dichtungselement (10) derart angeordnet ist, dass es unter der Wirkung einer axialen Kompression in seinen zweiten Zustand gebracht wird, und die erste Aufnahme derart angeordnet ist, dass der Ring (14) das ringförmige Dichtungselement axial gegen die Schulter (11) drücken kann, wenn er in seiner ersten Position ist, wobei der Ring in seiner zweiten Position das Dichtungselement in seinem zweiten Zustand lässt.

13. Vorrichtung nach Anspruch 12, wobei der Ring (14), wenn er in seiner zweiten Position ist, in dichtem Kontakt mit dem ringförmigen Dichtungselement (10) ist.

14. Vorrichtung nach Anspruch 12, wobei das Dichtungselement (10) derart angeordnet ist, dass es sich in seinem zweiten Zustand entlang einer ringförmigen Schlangenlinie (10.13) verformen kann.

15. Vorrichtung nach Anspruch 12, wobei das Dichtungselement (10) axial gegenüberliegende Abschnitte mit unterschiedlichen Steifigkeiten umfasst, wobei Abschnitte (10.14) geringerer Steifigkeit mit Abschnitten (10.15) höherer Steifigkeit auf einer selben Seite des Dichtungselements abwechseln.

16. Vorrichtung nach Anspruch 15, wobei die Abschnitte (10.14) geringerer Steifigkeit eine Dicke haben, die geringer als eine Dicke der Abschnitte (10.15) mit höherer Steifigkeit ist.

17. Vorrichtung nach Anspruch 15, wobei die Abschnitte (10.15) höherer Steifigkeit eine lokale Verstärkung (10.17) einschließen.

18. Vorrichtung nach Anspruch 1, wobei das Gehäuse (2) und der Ring (14) aus einem transparenten Material hergestellt sind.

## Claims

1. Device (1) for connecting at least one tube (101) to a pipe, including a tubular body (2) defining a passage (3) having an end provided with means for connection to the pipe and an opposite end including a housing (4.1) provided with means (5) for receiving and sealingly retaining an end portion of the tube, the housing including a terminal shoulder (11) and receiving an annular sealing member (10) that is disposed in the vicinity of the shoulder (11) and is deformable from a first state wherein the sealing member defines a first passage section and a second state wherein the sealing member defines a second passage section less than the first passage section, **characterised in that** the receiving and retaining means (5) include a ring (14) which is provided internally with an abutment (12) against entry of the tube into the ring and which is axially movable in the housing between a first position contacting the sealing member (10) and a second position retracted relative to the first position and **in that** the device includes releasable means (16, 20) for blocking movement of the ring (14) toward its first position that are adapted to be released from outside the body.

2. Device according to claim 1, wherein the receiving and sealingly retaining means include a sealing member (13) disposed in the ring (14) to grip the tube.

3. Device according to Claim 1, wherein the ring (14) includes an external rim (14.1) projecting axially to be introduced between the body (2) and an external portion (10.16) of the sealing member (10).

4. Device according to claim 3, wherein the external rim (14.1) has a frustoconical internal surface (14.2) and the external portion (10.16) of the sealing member (10) has a frustoconical shape.

5. Device according to claim 1, wherein the shoulder (11) has a frustoconical shape with its smaller section oriented toward the ring and the surface of the ring (14) adapted to bear on the sealing member (10) has a frustoconical shape with its smaller section oriented toward the shoulder.

6. Device according to claim 1, wherein the ring (14) is adapted to grip the tube end portion.

7. Device according to claim 6, wherein the ring (14) is provided internally with at least one relief for exerting a local pressure on the tube end portion.

8. Device according to claim 1, wherein the abutment means include a latch (16; 21) mounted on the body (2) to be radially movable between a locking position projecting into the housing (4.1) and a retracted release position, the ring (14) being provided with an external groove (17) to receive the latch in the locking position when the ring is in its second position.

9. Device according to claim 8, wherein the latch (16) has a ring shape provided with at least one resilient tab (16.3) bearing on a surface of the body (2) to bias the latch into its locking position.

10. Device according to claim 1, wherein the abutment means include at least one latch (21) mounted on the ring (14) to be movable radially between a locking position projecting into an opening (22) in the body (2) leading to the outside thereof and a release position retracted relative to the opening.

11. Device according to claim 10, wherein the latch (21) is an elastically deformable arm having an end secured to the ring (14) and a free end projecting into the opening to extend in an axial direction of the ring.

12. Device according to claim 1, wherein the sealing member (10) is adapted to be brought into its second state by axial compression and the first housing is such that the ring (14) can axially compress the annular sealing member against the shoulder (11) when it is in its first position, the ring in its second position leaving the sealing member free to be in its first state.

13. Device according to claim 12, wherein when the ring (14) is in its second position the ring is in sealing contact with the annular sealing member (10).

14. Device according to claim 12, wherein the sealing member (10) is adapted to be deformed into its second state along a sinuous annular line (10.13).

15. Device according to claim 12, wherein the sealing member (10) includes axially opposite portions of different stiffness, lower stiffness portions (10.14) alternating with higher stiffness portions (10.15) on the same side of the sealing member.

16. Device according to claim 15, wherein the lower stiffness portions (10.14) are thinner than the higher stiffness portions (10.15).

17. Device according to claim 15, wherein the higher stiffness portions (10.15) incorporate a local reinforcement (10.17).

18. Device according to claim 1, wherein the body (2) and the ring (14) are made of a transparent material.
